# EUROPÄISCHE PATENTSCHRIFT

(11) **EP 3 022 104 B1**
(45) Veröffentlichungstag und Bekanntmachung des Hinweises auf die Patenterteilung: **20.11.2019**
(21) Anmeldenummer: 14701498.9
(22) Anmeldetag: 15.01.2014
(51) Int. Cl.: B61C 17/04

(54) **FÜHRERSTAND EINES SCHIENENFAHRZEUGS UND MONTAGEEINRICHTUNG FÜR EINE STRECKENKAMERA UND FRONTFENSTER-SONNENROLLOS EINES SCHIENENFAHRZEUGS**
OPERATOR COMPARTMENT OF A RAIL VEHICLE, ASSEMBLY DEVICE FOR A TRACK CAMERA, AND FRONT WINDOW ROLL-UP SUN SHIELD OF A RAIL VEHICLE
CABINE DE CONDUCTEUR D'UN VÉHICULE FERROVIAIRE ET MOYEN DE MONTAGE D'UNE CAMÉRA DE VOIE ER DE STORES PARE-SOLEIL DE FENÊTRE AVANT D'UN VÉHICULE FERROVIAIRE

(43) Veröffentlichungstag der Anmeldung: 25.05.2016
(73) Patentinhaber: Siemens Mobility GmbH, 81739 München (DE)
(72) Erfinder: HEBERLING, Jörn, 06849 Dessau (DE); MEHLAN, Markus, 81241 München (DE)
(86) Internationale Anmeldenummer: PCT/EP2014/050684
(87) Internationale Veröffentlichungsnummer: WO 2015/106806

(56) Entgegenhaltungen:
- EP-A1- 2 628 649
- WO-A1-94/25324
- DE-A1- 19 743 306

## Beschreibung

Die Erfindung bezieht sich auf einen Führerstand eines Schienenfahrzeugs mit zwei durch einen Verbindungsholm getrennten Frontfenstern, mit einer im unteren Bereich des Verbindungsholms mittels einer Befestigungseinrichtung angebrachten Streckenbeobachtungskamera und mit im Innenraum des Führerstands herabziehbaren Frontfenster-Sonnenrollos, die beiderseits entlang der Frontfenster verlaufende Führungen mit unteren Halteeinrichtungen aufweisen.

Bei einem bekannten Führerstand in dieser Art sind vorgegebene Einbaulagen sowohl für das Frontfenster-Sonnenrollo als auch für die Streckenbeobachtungskamera eingehalten, indem die Führungen der Frontfenster-Sonnenrollos mit ihren oberen und unteren Halteeinrichtungen am Fahrzeugrohbau oder an inneren Verkleidungen des Fahrzeugrohbaus befestigt sind. Die Streckenbeobachtungskamera ist für sich über eine Befestigungseinrichtung mit dem Fahrzeugrohbau oder seiner inneren Verkleidung verbunden. Ihre Position muss im Wischfeld des Scheibenwischers liegen und ihr Blickfeld darf durch die Frontfenster-Rollos nicht beeinträchtigt sein. Diese Forderungen sind im Frontbereich des Führerstandes konstruktiv und von der Montage her relativ schwierig umzusetzen.

Der Erfindung liegt die Aufgabe zu Grunde, einen Führerstand eines Schienenfahrzeugs vorzuschlagen, bei dem die Frontfenster-Sonnenrollos und die Streckenbeobachtungskamera vergleichsweise einfach angebracht werden können.

Zur Lösung dieser Aufgabe ist bei einem Führerstand eines Schienenfahrzeugs der eingangs angegebenen Art erfindungsgemäß an dem Verbindungsholm in seinem unteren Bereich ein Längsträger angebracht, an dem die Befestigungseinrichtung der Streckenbeobachtungskamera gehalten ist und der einander gegenüberliegend Führungen und die unteren Halteeinrichtungen (21, 22) für die Frontfenster-Sonnenrollos (25, 26) aufweist.

Ein wesentlicher Vorteil des erfindungsgemäßen Führerstands wird darin gesehen, dass die unteren Halteeinrichtungen der einander benachbarten Führungen der beiden Frontfenster-Sonnenrollos und die Befestigungseinrichtung der Streckenbeobachtungskamera mittels eines einzigen Bauteils, nämlich des Längsträgers, an dem Verbindungsholmen angebracht werden können, wodurch der notwendige Einbauraum und das Gewicht verringert wird. Außerdem gibt es vergleichsweise wenige Verbindungsstellen mit dem Fahrzeugrohbau - es ist nur der Längsträger mit dem Fahrzeugrohbau zu verbinden - und auch der Montageaufwand ist verringert. Hinzu kommt, dass sich die Anbringung der Streckenbeobachtungskamera und der Frontfenster-Sonnenrollos mittels des Längsträgers harmonisch in die gesamte Verkleidungsoberfläche einfügt. Ergänzend ist darauf hin zu weisen, dass der Längsträger mit den unteren Halteeinrichtungen für die Frontfenster-Rollos und der Befestigungseinrichtung für die Streckenbeobachtungskamera vormontiert werden kann, so dass bei der Ausrüstung des Schienenfahrzeugs nur der Längsträger zu montieren ist.

An dem Längsträger kann die Befestigungseinrichtung der Streckenbeobachtungskamera in unterschiedlicher Weise gehalten sein; als besonders vorteilhaft wird es angesehen, wenn der Längsträger als Befestigungseinrichtung für die Streckenbeobachtungskamera ein Querloch zur Aufnahme einer die Streckenbeobachtungskamera haltenden Befestigungsstange aufweist. Durch Drehen der Befestigungsstange um ihre Längsachse im Querloch kann die Streckenbeobachtungskamera dann leicht in die gewünschte Position gebracht werden.

Im Rahmen der Erfindung erscheint es ferner vorteilhaft, wenn an dem Verbindungsholm in seinem oberen Bereich ein Querträger angebracht ist, der einander gegenüberliegende obere Halteeinrichtungen für die Frontfenster-Sonnenrollos aufweist. Auch durch einen solchen Querträger zusätzlich zu dem Längsträger ist eine einfache Möglichkeit gegeben, die Frontfenster-Sonnenrollos im Bereich des Verbindungsholms in einfacher Weise zu halten, ohne für jede obere Halteeinrichtung der Frontfenster-Sonnenrollos besondere Montageeinrichtungen an dem Fahrzeugrohbau vorzusehen.

Als vorteilhaft wird es auch erachtet, wenn der Längsträger mit dem Querträger mittels eines Verbindungsteils unter Bildung eines einheitlichen Trägers für die Streckenbeobachtungskamera und die beiden einander benachbarten Führungen der Frontfenster-Sonnenrollos verbunden ist. In diesem Falle können mit einem einheitlichen Träger, der lediglich für sich am Verbindungsholm angebracht werden muss, sowohl die Streckenbeobachtungskamera als auch die beiden benachbarten Führungen der Frontfenster-Rollos gehalten werden.

Zur weiteren Erläuterung der Erfindung ist in
Fig.1 eine Ansicht auf ein Ausführungsbeispiels des erfindungsgemäßen Führerstands eines Schienenfahrzeugs, in
Fig.2 vergrößert der Ausschnitt A gemäß Figur 1 und in
Fig.3 ein Ausführungsbeispiel des Längsträgers vergrößert dargestellt.

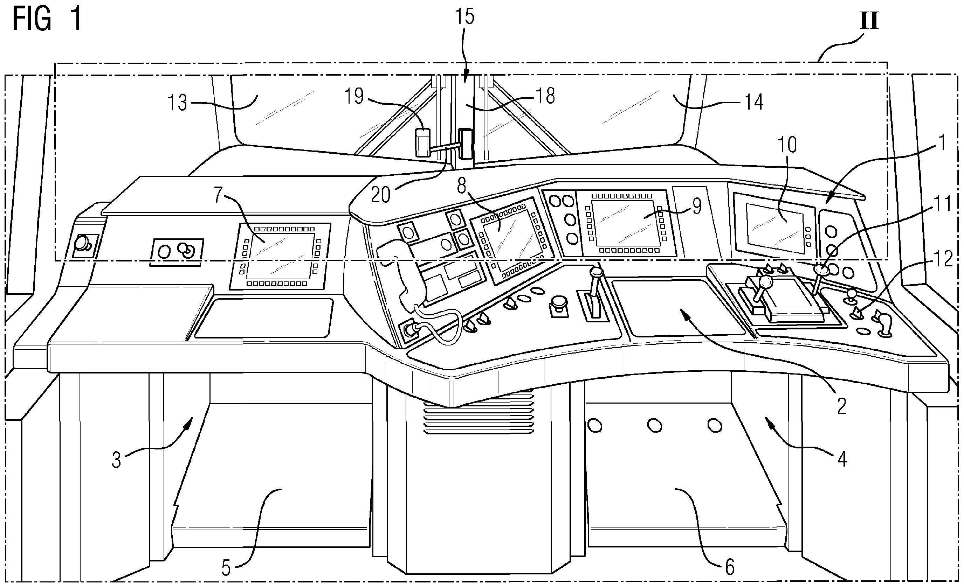

Wie die Figur 1 zeigt, ist ein dargestellter Führerstand 1 eines nicht weiter gezeigten Schienenfahrzeug für zwei Schienenfahrzeugführer eingerichtet, für die auf nicht dargestellten Sitzen nebeneinander Platz vor einem Bedienungspult 2 ist. Unterhalb des Bedienungspults 2 befinden sich Nischen 3 und 4, in denen sich zur Erzielung einer optimalen Sitzposition für die jeweiligen Schienenfahrzeugführer Fußpodeste 5 und 6 befinden.

Auf dem Bedienungspult 2 sind unter anderem mehrere Monitore 7, 8, 9 und 10 angebracht sowie mehrere Hebel 11 und Schalter 12 zur Bedienung des Schienenfahrzeugs.

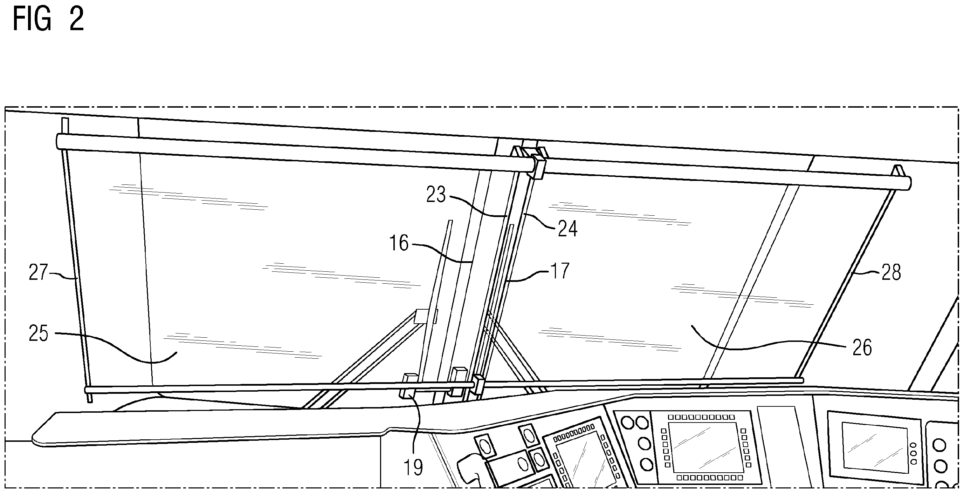

Wie die Figur 1 ferner zeigt, ist das Bedienungspult 2 des Führerstands 1 vor zwei Frontfenstern 13 und 14 installiert, die mittels eines Verbindungsholms 15 an ihren aneinander zugewendeten Rändern 16 und 17 (siehe auch Fig. 2) miteinander verbunden sind.

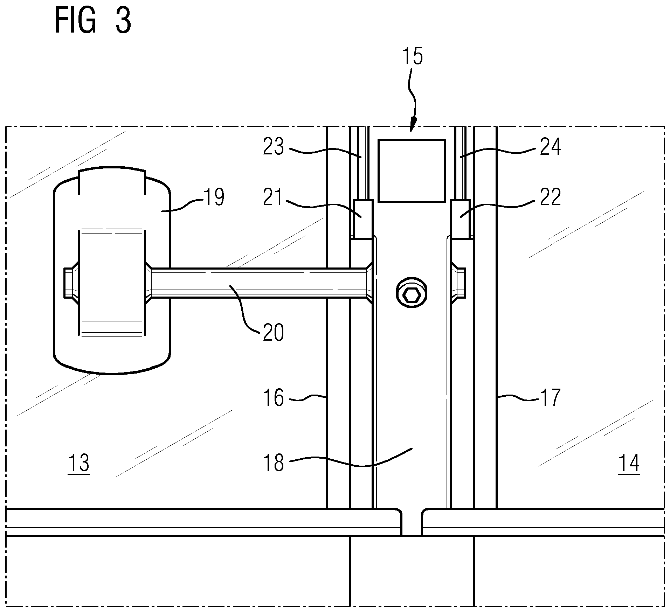

Am Verbindungsholm 15 ist ein Längsträger 18 angebracht, der in Fig. 3 besonders gut zu erkennen ist. An dem Längsträger 18 ist eine Streckenkamera 19 gehalten (vgl. auch Figur 3), die über eine Befestigungsstange 20 in einem Querloch des Längsträgers 18 gehalten ist. Wie wiederum insbesondere Fig. 3 erkennen lässt, ist der Längsträger 18 an seinem in Fig. 3 oberen Ende mit unteren Halteeinrichtungen 21 und 22 von in Führungen 23 und 24 führbaren Frontfenster-Sonnenrollos 25 und 26 versehen.

Wie insbesondere Fig. 2 erkennen lässt, weisen die Frontfenster-Sonnenrollos 25 und 26 zusätzlich äußere Führungen 27 und 28 auf. Diese weiteren Führungen 27 und 28 sind in bekannter Weise an dem Fahrzeugrohbau des Schienenfahrzeugs befestigt.

Nicht dargestellt ist figürlich, dass gegebenenfalls die Führungen 23 und 24 der Frontfenster-Sonnenrollos 25 und 26 mit ihren oberen Halteeinrichtungen mittels eines Querträgers an dem Verbindungsholm 15 befestigt werden können, was insofern vorteilhaft ist, als dann auch nur noch der Querträger für sich mit dem Verbindungsholm 15 zu verbinden ist.

## Patentansprüche

1. Führerstand (1) eines Schienenfahrzeugs mit zwei durch einen Verbindungsholm (15) getrennten Frontfenstern (13, 14), mit einer im unteren Bereich des Verbindungsholms (15) mittels einer Befestigungseinrichtung (20) angebrachten Streckenbeobachtungskamera (19) und mit im Innenraum des Führerstands (1) herabziehbaren Frontfenster-Sonnenrollos (25, 26), die beiderseits entlang der Frontfenster (13, 14) verlaufende Führungen (23,24) mit unteren Halteeinrichtungen (21, 22) aufweisen,
**dadurch gekennzeichnet, dass**
an dem Verbindungsholm (15) in seinem unteren Bereich ein Längsträger (18) angebracht ist, an dem die Befestigungseinrichtung (20) der Streckenbeobachtungskamera (19) gehalten ist und der einander gegenüberliegend die Führungen (23, 24) und die unteren Halteeinrichtungen (21, 22) für die Frontfenster-Sonnenrollos (25, 26) aufweist.

2. Führerstand nach Anspruch 1,
**dadurch gekennzeichnet, dass**
der Längsträger (18) als Befestigungseinrichtung für die Streckenbeobachtungskamera (19) ein Querloch zur Aufnahme einer die Streckenbeobachtungskamera (19) haltenden Befestigungsstange (20) aufweist.

3. Führerstand nach Anspruch 1 oder 2,
**dadurch gekennzeichnet, dass**
an dem Verbindungsholm (15) in seinem oberen Bereich ein Querträger angebracht ist, der einander gegenüberliegende obere Halteeinrichtungen für die Frontfenster-Sonnenrollos (25, 26) aufweist.

4. Führerstand nach Anspruch 3,
**dadurch gekennzeichnet, dass**
der Längsträger mit dem Querträger mittels eines Verbindungsteils unter Bildung eines einheitlichen Trägers für die Streckenbeobachtungskamera, die beiden einander benachbarten Führungen (23, 24) der Frontfenster-Sonnenrollos (25, 26) und die Halteeinrichtungen für die Frontfenster-Sonnenrollos (25, 26) verbunden ist.

## Claims

1. Operator compartment (1) of a rail vehicle with two front windows (13, 14) divided by a connection beam (15), with a track observation camera (19) attached in the lower region of the connection beam (15) by means of a fastening device (20) and with front window roll-up sun shields (25, 26) which can be pulled down in the interior of the operator compartment (1), which roll-up sun shields (25, 26) have guides (23, 24) running along both sides of the front window (13, 14) with lower retaining devices (21, 22),
**characterised in that**
a longitudinal member (18) is attached to the connection beam (15) in the lower region thereof, on which longitudinal member (18) the fastening device (20) of the track observation camera (19) is retained and which has the guides (23, 24) and the lower retaining devices (21, 22) for the front window roll-up sun shields (25, 26) in a mutually opposite manner.

2. Operator compartment according to claim 1,
**characterised in that**
the longitudinal member (18) has, as fastening device for the track observation camera (19), a cross hole for receiving a fastening rod (20) retaining the track observation camera (19) .

3. Operator compartment according to claim 1 or 2,
**characterised in that**
a cross member is attached to the connection beam (15) in the upper region thereof, the cross member having mutually opposite upper retaining devices for the front window roll-up sun shields (25, 26).

4. Operator compartment according to claim 3,
**characterised in that**
the longitudinal member is connected to the cross member by means of a connecting element while forming a single member for the track observation camera, the two mutually opposite guides (23, 24) of the front window roll-up sun shields (25, 26) and the retaining devices for the front window roll-up sun shields (25, 26).

## Revendications

1. Cabine de conduite (1) d'un véhicule ferroviaire comprenant deux vitres avant (13, 14) séparées par une traverse de liaison (15), une caméra d'observation de voie (19) montée dans la zone inférieure de la traverse de liaison (15) au moyen d'un dispositif de fixation (20), et des stores pare-soleil de vitre avant (25, 26) qui sont abaissables à l'intérieur de la cabine de conduite (1) et qui comportent de chaque côté des guides (23, 24) qui s'étendent le long des vitres avant (13, 14) et sont pourvus de dispositifs de retenue inférieurs (21, 22), **caractérisée en ce qu'**un support longitudinal (18) est monté sur la traverse de liaison (15) dans la zone inférieure de celle-ci, support longitudinal sur lequel le dispositif de fixation (20) de la caméra d'observation de voie (19) est maintenu et qui comporte, opposés les uns aux autres, les guides (23, 24) et les dispositifs de retenue inférieurs (21, 22) destinés aux stores pare-soleil de vitre avant (25, 26).

2. Cabine de conduite selon la revendication 1, **caractérisée en ce que** le support longitudinal (18) comporte, en tant que dispositif de fixation pour la caméra d'observation de voie (19), un trou transversal destiné à recevoir une barre de fixation (20) qui maintient la caméra d'observation de voie (19).

3. Cabine de conduite selon la revendication 1 ou 2, **caractérisée en ce qu'**un support transversal qui comporte des dispositifs de retenue supérieurs, opposés l'un à l'autre, destinés aux stores pare-soleil de vitre avant (25, 26) est monté sur la traverse de liaison (15) dans la zone supérieure de celle-ci.

4. Cabine de conduite selon la revendication 3, **caractérisée en ce que** le support longitudinal est relié au support transversal au moyen d'un raccord, formant ainsi un support unitaire pour la caméra d'observation de voie, les deux guides (23, 24) contigus l'un à l'autre des stores pare-soleil de vitre avant (25, 26) et les dispositifs de retenue destinés aux stores pare-soleil de vitre avant (25, 26).
